# EUROPÄISCHE PATENTSCHRIFT

(11) **EP 1 924 833 B1**
(45) Veröffentlichungstag und Bekanntmachung des Hinweises auf die Patenterteilung: **14.11.2018**
(21) Anmeldenummer: 06792881.2
(22) Anmeldetag: 17.08.2006
(51) Int. Cl.: G01M 3/20

(54) **LECKSUCHGERÄT MIT SCHNÜFFELSONDE**
LEAK DETECTOR WITH A SNIFFING PROBE
DETECTEUR DE FUITE COMPORTANT UN RENIFLEUR

(30) Priorität: 13.09.2005 DE 102005043494
(43) Veröffentlichungstag der Anmeldung: 28.05.2008
(73) Patentinhaber: Inficon GmbH, 50968 Köln (DE)
(72) Erfinder: GROSSE BLEY, Werner, 53125 Bonn (DE); SEITZ, Sandra, 40223 Düsseldorf (DE)
(74) Vertreter: dompatent von Kreisler Selting Werner - Partnerschaft von Patent- und Rechtsanwälten mbB
(86) Internationale Anmeldenummer: PCT/EP2006/065421
(87) Internationale Veröffentlichungsnummer: WO 2007/031386

(56) Entgegenhaltungen:
- WO-A2-03/008923
- DE-A1- 19 504 278
- DE-A1- 19 735 250
- DE-A1-102005 009 713
- JP-A- 11 153 507

## Beschreibung

Die Erfindung betrifft ein Lecksuchgerät mit Schnüffelsonde, mit einem Hauptgerät, das eine Vakuumpumpe und einen Testgassensor enthält und über eine Schlauchleitung mit einer Schnüffelsonde verbunden ist.

In DE 44 45 829 A1 (Leybold AG) ist ein Gegenstrom-Schnüffellecksucher beschrieben, der am Ende eines Schnüffelschlauchs eine Hochvakuumpumpenstufe aufweist. Verwendet wird ein etwa 4 m langer Schnüffelschlauch, der als Kapillarleitung ausgebildet ist und einen Innendurchmesser von etwa 0,4 mm hat. Der Schnüffelschlauch bringt die erforderliche Drosselwirkung auf, um das an seinem Auslassende erzeugte Vakuum aufrecht zu erhalten.

DE-OS 24 41 124 beschreibt eine Lecksucheinrichtung mit einem Schnüffelschlauch, bei der der Schlauch einen relativ großen Durchmesser hat. Unmittelbar vor dem Testgassensor, bei dem es sich um ein Massenspektrometer handelt, ist eine Drosselstelle vorgesehen. Dadurch, dass die Drosselstelle unmittelbar vor dem Testgassensor angeordnet ist, kann das zu untersuchende Gas mit Hilfe der Vakuumpumpe schneller vom Einlass der Schnüffelsonde bis unmittelbar vor die Drosselstelle, also bis zum Testgassensor, gefördert werden. Dadurch wird die Ansprechzeit, die von der Länge der Schlauchleitung abhängt, verringert.

Die (nicht vorveröffentlichte) Patentanmeldung DE 10 2005 009 713 beschreibt ein Lecksuchgerät mit Schnüffelsonde, bei dem die Schlauchleitung, die die Schnüffelsonde mit einem Hauptgerät verbindet, mindestens zwei Kapillarleitungen enthält, die im Hauptgerät oder in der Schnüffelsonde selektiv verschließbar sind. Durch gezieltes Öffnen eines oder mehrerer Ventile, kann diejenige Kapillarleitung ausgewählt werden, über die Luft angesaugt werden soll. Auf diese Weise kann durch Wahl einer Kapillarleitung mit einem bestimmten Querschnitt die Totzeit verändert werden. Ferner können zwei verschiedene Gerätetypen, die mit unterschiedlichen Gasdurchsätzen arbeiten, in Kombination mit derselben Schlauchleitung verwendet werden.

Weitere Lecksuchgeräte nach dem Stand der Technik werden offenbart in DE19735250, DE19504278 und WO03/008923.

Bei der Schnüffellecksuche stellt sich das Problem, möglichst schnell große Bereiche des Prüflings abzusuchen und dabei ein Leck zunächst zu finden. Anschließend ist das gefundene Leck bezüglich seiner Größe zu bewerten, wobei als Bezugsgröße ein davor eingestelltes Triggersignal benutzt wird. Diese beiden Anforderungen widersprechen sich, da
für eine effiziente Lecksuche eine kurze Ansprechzeit und eine gute Abstandsempfindiichkeit erforderlich ist, und
zur quantitativen Bewertung jedoch eine hohe Stabilität des Signals benötigt wird, die bei schneller Messung nicht einfach erreichbar ist.

Aus der Praxis sind Lecksuchgeräte bekannt, mit denen ein Lecksuchmodus und ein Leckratenmessmodus durchgeführt werden kann. Bei Geräten mit differenzierender Anzeige, bei denen die Ableitung des Messsignals nach der Zeit bestimmt wird, um konstante Untergrundkonzentrationen zu unterdrücken, wird im Suchmodus die höchstmögliche Vorverstärkerempfindlichkeit gewählt, um geringe Leckgaskonzentrationen auch schon in größerer Entfernung vor dem Leck zu erkennen. Bei Geräten mit nicht differenzierender Direktanzeige wird ein Search-Triggerlevel definiert, der erheblich unter der eigentlichen Triggergrenze liegt. In beiden Fällen wird durch Erhöhung der Empfindlichkeit oder Herabsetzung des Triggerlevels die Abstandsempfindlichkeit nicht besser, denn insbesondere für schwere Gase mit geringem Diffusionskoeffizienten, wie z. B. Kältemittel, ist die Leckgas-Wolke, die sich um das Leck herum bildet, eng begrenzt. Im Falle einer Verstärkungserhöhung muss eine stärkere Signalunruhe in Kauf genommen werden. Falls durch längere Mittelungszeit das Signal beruhigt wird, steigt es erheblich langsamer an und damit sinkt die mögliche Suchgeschwindigkeit. Bei nicht differenzierender Anzeige können langsame Untergrundschwankungen nur durch wiederholte manuelle Nullpunktnachstellung korrigiert werden, was bei der erhöhten Empfindlichkeit im Suchmodus schwierig ist.

Der Erfindung liegt die Aufgabe zugrunde, ein Lecksuchgerät mit Schnüffelsonde zu schaffen, das es gestattet, möglichst schnell große Bereiche des Prüflings auf Lecks abzusuchen und dabei jedes Leck schnell zu finden, das aber auch eine exakte Größenbestimmung des Lecks ermöglicht.

Das erfindungsgemäße Lecksuchgerät ist durch die Merkmale des Anspruchs 1 gekennzeichnet. Hiernach weist die Schlauchleitung mindestens einen ersten Durchlass und einen zweiten Durchlass auf, die unterschiedliche Querschnitte haben, wobei mindestens der Durchlass mit dem größeren Querschnitt mit einem Ventil versehen ist, und wobei ein Schalter vorgesehen ist, zur Umschaltung zwischen einem Lecksuchmodus, bei dem der größere Durchlass offen ist, und einem Leckratenmessmodus, bei dem der größere Durchlass gesperrt ist.

Im Lecksuchmodus erfolgt die Suche nach Lecks mit dem großen Querschnitt, wodurch sich eine große Reichweite und eine kurze Ansprechzeit ergibt. Dadurch wird erreicht, dass Lecks auch aus größerer Entfernung gefunden werden, da durch den starken Ansaug-Effekt aus größerer Entfernung und bei schnellerer Bewegung der Schnüffelsonde kurzzeitig eine große Leckgasmenge aus der Wolke vor dem Leck angesaugt und unmittelbar zur Anzeige gebracht wird. Sowohl die Totzeit als auch die Anstiegszeit sind minimal, was die Lecksuche begünstigt. Es wird nicht die Verstärkung erhöht, was Fehlmessungen kleiner Störkonzentrationen zur Folge haben könnte. Erhöht wird vielmehr der Durchfiuss, was die Erfassung von Gas aus der Wolke vor dem Leck begünstigt.

Die Messung der Leckrate erfolgt dagegen mit kleinem Durchfluss, mit der Folge einer geringen Reichweite. Damit wird erreicht, dass bei Messung an der aus der Suche bekannten Leckposition das Leck quantitativ richtig und mit hoher Stabilität gemessen wird. Untergründe aus der Umgebung werden dabei durch den kleinen Durchfluss minimiert.

Im Lecksuchmodus bleibt eine feste Umgebungskonzentration eines Gases unabhängig vom Gasstrom in der Schnüffelleitung erhalten. Ein Leckgasstrom führt bei großem Gasstrom in der Schnüffelleitung zu einer Verringerung der Gaskonzentration in der um das Leck gebildeten Wolke, da durch nachströmende Luft eine Verdünnung erfolgt. Bei großem Gasstrom in der Schnüffelleitung wird also die feste Untergrundkonzentration in der Umgebung zu einem, im Vergleich zum Leck, größeren Signal führen. Obwohl also die Schnüffelleitung mit größerem Gasdurchsatz zu einem schnelleren Signalanstieg und besserer Abstandsempfindlichkeit führt, ist die Empfindlichkeit gegenüber Umgebungsverseuchungen mit Testgas höher.

Im Leckratensuchmodus, der mit einem geringeren Gasdurchsatz ausgeführt wird, hat das Lecksuchgerät aus den vorgenannten Gründen eine geringere Empfindlichkeit gegenüber Umgebungsverseuchungen.

Bei dem Lecksuchmodus erfolgt vorzugsweise eine kontinuierliche automatische Untergrundunterdrückung. Hierzu kann eine Einrichtung zur Ermittlung und Anzeige der zeitlichen Änderung des Signals des Testgassensors vorgesehen sein. Durch eine Differenziervorrichtung, die die Ableitung des Signals bildet, können langsam veränderliche Signale, zu denen auch die Untergrundsignale gehören, zu Null gesetzt werden. Die Messung der Leckrate erfolgt dagegen ohne automatische Untergrundkompensation.

Die verschiedenen Durchlässe der Schlauchleitung können aus Kapillaren bestehen, die innerhalb der Schlauchleitung verlaufen und unterschiedliche Durchmesser haben. Andererseits können die Durchlässe auch aus unterschiedlich großen Einlassöffnungen von Kapillaren bestehen, durch die die Gasströmung gedrosselt wird.

Vorzugsweise ist jeder der beiden Durchlässe mit einem eigenen Ventil versehen, so dass die Durchlässe wechselseitig geöffnet und geschlossen werden können. Es besteht aber auch die Möglichkeit, den kleineren Durchlass ständig offen zu halten und nur im Lecksuchmodus den großen Durchlass zuzuschalten.

Vorzugsweise unterscheiden sich die Trägergasströmungsraten in den beiden Durchlässen um mindestens den Faktor 10.

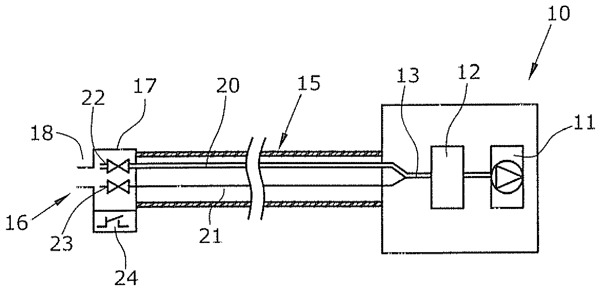

Im Folgenden wird unter Bezugnahme auf die einzige Figur der Zeichnung, ein Ausführungsbeispiel der Erfindung näher erläutert.

In der Zeichnung ist ein Lecksuchgerät nach der Erfindung schematisch dargestellt.

Das Lecksuchgerät weist ein Hauptgerät 10 auf, das diejenigen Komponenten enthält, die bei der Schnüffellecksuche nicht bewegt werden müssen. Das Hauptgerät 10 ist als Tischgerät oder Standgerät ausgebildet. Es enthält unter anderem eine Vakuumpumpe 11 und einen Testgassensor 12. Als Testgassensor kann ein Massenspektrometer oder ein Infrarot-Gasanalysator dienen. Die Vakuumpumpe 11 saugt die Luft durch den Testgassensor 12 hindurch. Der Einlass 13 des Testgasdetektors ist mit einer flexiblen Schlauchleitung 15 verbunden. Die Schlauchleitung, die eine Länge von mehreren Metern haben kann, führt zu der Schnüffelsonde 16. Die Schnüffelsonde 16 ist ein Handgerät mit einem Handgriff 17 und einem Schnüffelrohr 18. Sie kann pistolenförmig ausgebildet sein. Dieselbe Ventilanordnung wie im Handgerät kann sich auch im Hauptgerät befinden.

Die Schlauchleitung 15 enthält eine erste Kapillarleitung 20 und eine zweite Kapillarleitung 21, die die Schnüffelsonde 16 mit dem Hauptgerät 10 verbinden. In dem Handgerät 17 befindet sich eine Ventilanordnung aus einem ersten Ventil 22 und einem zweiten Ventil 23. Das erste Ventil 22 ist mit dem Einlass der ersten Kapillarleitung 20 verbunden und das zweite Ventil 23 ist mit dem Einlass der zweiten Kapillarleitung 21 verbunden. Die Einlässe beider Ventile 22 und 23 sind mit dem Schnüffelrohr 18 verbunden. Die Ventile 22 und 23 sind Magnetventile, die elektrisch durch einen Schalter 24 gesteuert werden, der am Handgerät 17 angebracht ist. Es besteht aber auch die Möglichkeit, handbetätigte Ventile zu verwenden, die vom Bediener am Handgerät 17 mechanisch betätigt werden. Beide Ventile 22,23 sind so gekoppelt, dass maximal eines der Ventile geöffnet ist. Wird das Ventil 22 geöffnet, so wird das Ventil 23 gesperrt. Wird das Ventil 22 gesperrt, so wird das Ventil 23 geöffnet. Auf diese Weise werden die Durchlässe, die hier von den Kapillaren 20 und 21 gebildet werden, wechselseitig geöffnet. Die Ventile 22,23 sind Schaltventile, die zwischen Durchlasszustand und Sperrzustand umschaltbar sind. Die Ventilanordnung, die bei dem vorliegenden Ausführungsbeispiel in dem Handgerät enthalten ist, kann alternativ auch in dem Hauptgerät 10 untergebracht sein.

Die Umschaltung zwischen Lecksuchmodus und Leckratenmessmodus erfolgt an dem Schalter 24. Ist dieser Schalter eingeschaltet, so ist das Ventil 22 geöffnet und das Ventil 23 gesperrt, was dem Lecksuchmodus entspricht. Ist der Schalter 24 ausgeschaltet, ist das Ventil 22 gesperrt und das Ventil 23 geöffnet, was dem Leckratenmessmodus entspricht.

Bei der Schnüffellecksuche befindet sich in dem Prüfobjekt, beispielsweise einem Behälter, ein Testgas. Als Testgas wird häufig Helium eingesetzt, das vor dem Verschließen der auf Lecks zu untersuchenden Hohlräume darin eingebracht wird. Das Prüfobjekt wird dann mit Hilfe der Schnüffelsonde 16 abgetastet. Das Schnüffelrohr 18 nimmt das aus einem eventuell vorhandenen Leck ausströmende Testgas auf, das in das Hauptgerät 10 geführt und dort analysiert wird.

Zunächst wird der Lecksuchmodus eingestellt, bei dem die Kapillarleitung 20 geöffnet und die Kapillarleitung 21 gesperrt ist. Gleichzeitig wird eine Differenzialanzeige aktiviert, durch die langsam veränderliche Signale des Testgassensors 12 eliminiert werden. In diesem Zustand wird mit der Schnüffelsonde die Umgebung des zu untersuchenden Körpers abgetastet, indem die Schnüffelsonde in der Nähe der Oberfläche des Körpers entlanggeführt wird, Auf diese Weise kann ein vorhandenes Leck lokalisiert werden. Anschließend erfolgt durch Betätigung des Schalters 24 eine Umschaltung auf den Leckratenmessmodus. Gleichzeitig wird die Differenzialanzeige abgeschaltet und durch eine direkte Anzeige des Detektionssignals ersetzt. Nunmehr erfolgt der Leckratenmessmodus unter ausschließlicher Benutzung der engen Kapillarleitung 21. Auf diese Weise erfolgt eine quantitative Bestimmung des Lecks mit hoher Stabilität und Genauigkeit,

## Patentansprüche

1. Lecksuchgerät mit Schnüffelsonde, mit einem Hauptgerät (10), das eine Vakuumpumpe (11) und einen Testgassensor (12) enthält und über eine Schlauchleitung (15) mit der Schnüffelsonde (16) verbunden ist,
**dadurch gekennzeichnet, dass**
die Schlauchleitung (15) einen ersten Durchlass und einen zweiten Durchlass aufweist, die unterschiedliche Querschnitte haben, dass mindestens der Durchlass mit dem größeren Querschnitt mit einem Ventil (22,23) versehen ist und dass ein Schalter (24) vorgesehen ist, zur Umschaltung zwischen einem Lecksuchmodus, bei dem der größere Durchlass offen ist, und einem Leckratenmessmodus, bei dem der größere Durchlass gesperrt ist.

2. Lecksuchgerät nach Anspruch 1, **dadurch gekennzeichnet, dass** eine Einrichtung zur Ermittlung und Anzeige der zeitlichen Änderung des Signals des Testgassensors (12) vorgesehen ist.

3. Lecksuchgerät nach Anspruch 1 oder 2, **dadurch gekennzeichnet, dass** der Schalter (24) an der Schnüffelsonde (16) angeordnet ist.

4. Lecksuchgerät nach einem der Ansprüche 1 - 3, **dadurch gekennzeichnet, dass** die Schlauchleitung (15) mindestens zwei Kapillarleitungen (20,21) enthält, wobei die eine Kapillarleitung (20) den ersten Durchlass und die andere Kapillarleitung (21) den zweiten Durchlass bildet.

5. Lecksuchgerät nach einem der Ansprüche 1 - 4, **dadurch gekennzeichnet, dass** sich die Trägergasströmungen in den beiden Durchlässen um mindestens den Faktor 10 unterscheiden.

6. Lecksuchgerät nach einem der Ansprüche 1 -5, **dadurch gekennzeichnet, dass** das mindestens eine Ventil (22,23) in dem Hauptgerät (10) enthalten ist.

## Claims

1. A leakage search assembly having a sniffing probe, comprising a main device (10) containing a vacuum pump (11) and a tracer gas sensor (12) and being connected with the sniffing probe (16) through a flexible tubing (15),
**characterized in that**
the flexible tubing (15) comprises a first passage and a second passage having different cross sections, that at least the passage having the larger cross section is provided with a valve (22, 23), and that a switch (24) is provided for switching between a leak search mode, in which the larger passage is open, and a leakage rate measuring mode, in which the larger passage is closed.

2. The leakage search assembly of claim 1, **characterized in that** a means for determining and displaying the variation in time of the signal of the tracer gas sensor (12) is provided.

3. The leakage search assembly of claims 1 or 2, **characterized in that** the switch (24) is arranged on the sniffing probe (16).

4. The leakage search assembly of one of claims 1-3, **characterized in that** the flexible tubing (15) includes at least two capillary lines (20, 21), wherein one capillary line (20) forms the first passage and the other capillary line (21) forms the second passage.

5. The leakage search assembly of one of claims 1-4, **characterized in that** the carrier gas flows in the two passages differ by at least the factor 10.

6. The leakage search assembly of one of claims 1-5, **characterized in that** the at least one valve (22, 23) is contained in the main device (10).

## Revendications

1. Appareil de détection des fuites doté d'une sonde de reniflage, avec un appareil principal (10) contenant une pompe à vide (11) et un capteur de gaz de test (12) et étant connecté à la sonde de reniflage (16) par le biais d'un tube flexible (15), **caractérisé en ce que** le tube flexible (15) comporte un premier passage et un deuxième passage, ayant des sections différentes ; **en ce qu'**au moins le passage avec la section la plus large est prévu doté d'une valve (22, 23), **en ce qu'**un commutateur (24) est prévu afin de commuter entre un mode de recherche des fuites, lorsque le grand passage est ouvert, et un mode de taux de fuite, lorsque le grand passage est fermé.

2. Appareil de détection des fuites selon la revendication 1, **caractérisé en ce qu'**un dispositif de mesure et d'affichage des changements temporels du signal du capteur de gaz de test (12) est prévu.

3. Appareil de détection des fuites selon la revendication 1 ou 2, **caractérisé en ce que** le commutateur (24) est agencé sur la sonde de reniflage (16) .

4. Appareil de détection des fuites selon l'une des revendications 1 à 3, **caractérisé en ce que** le tube flexible (15) contient au moins deux tubes capillaires (20, 21), dans lequel l'un des capillaires (20) forme le premier passage et l'autre capillaire (21) forme le deuxième passage.

5. Appareil de détection des fuites selon l'une des revendications 1 à 4, **caractérisé en ce que** les débits de gaz porteur au travers des deux passages se différencient au moins par un facteur 10.

6. Appareil de détection des fuites selon l'une des revendications 1 à 5, **caractérisé en ce que** l'au moins une valve (22, 23) est contenue dans l'appareil principal (10) .
